# EUROPEAN PATENT APPLICATION

(11) **EP 1 750 158 A1**
(43) Date of publication of application: **07.02.2007**
(21) Application number: 05741135.7
(22) Date of filing: 18.05.2005
(51) Int. Cl.: G02C 7/04, A61F 2/16, C08J 7/12, C08L 101/00

(54) **OCULAR LENS MATERIAL AND METHOD FOR PRODUCING SAME**

(30) Priority: 24.05.2004 JP 2004153256; 10.05.2005 JP 2005136844
(71) Applicant: Shiseido Company, Limited, Chuo-ku Tokyo 104-8010 (JP); Suda, Yukimitsu, Yokohama-shi, Kanagawa 224-8558 (JP)
(72) Inventor: SUDA, Yukimitsu, SHISEIDO RESEARCH CENTER, Yokohama-shi, Kanagawa 224-8558 (JP); MIYAZAWA, Kazuyuki, SHISEIDO RESEARCH CENTER, Yokohama-shi, Kanagawa 224-8558 (JP); ISHIHARA, Kazuhiko, Mitaka-shi, Tokyo 181-0011 (JP)
(74) Representative: Merkle, Gebhard
(86) International application number: PCT/JP2005/009081
(87) International publication number: WO 2005/114303

(57) **Abstract**

The present invention is an eye lens material wherein phosphorylcholine groups of a specific structure are covalently bonded onto the material surface by means of an after-treatment in which a phosphorylcholine-containing chemical compound is reacted with an eye lens material.

The object of the present invention is to provide a contact lens that prevents protein adsorption and a method of manufacturing thereof.

## Description

### TECHNICAL FIELD

The present invention relates to an eye lens material for contact lenses and such, a method of manufacturing it, and a method of preventing protein adsorption. More specifically, it relates to a method of preventing protein stains by treating the surface of an eye lens material (particularly for contact lenses) by means of an after-treatment using a new phosphorylcholine group-containing chemical compound.

### BACKGROUND ART

The practice of polymerizing phosphorylcholine group-containing monomers for use as a contact lens material is a prior art (Patent Documents 1-3). For example, Patent Document 1 discloses a moist soft contact lens containing a phosphorylcholine group-containing (meth)acrylic ester as a constitutional unit; it is described as having superior moisture content, oxygen permeability, and tensile strength, as well as reduced protein adsorption and the ability to suppress stain adhesion.

As an example of an after-treatment method for contact lenses, Patent Document 4 describes polymerization of phosphorylcholine group-containing monomers on the contact lens surface to prepare a contact lens having hydrophilic surfaces and reduced protein adsorption.

In addition, Patent Document 5 describes a reduction in protein adsorption by chemically bonding a low molecular weight phosphorylcholine compound onto the contact lens surface. However, this method is shown to be incapable of introducing a sufficient amount of phosphorylcholine groups onto the contact lens surface when an attempt to duplicate this method is actually made. That is, the essential difference between the present invention and the method shown in Patent Document 5 is a difference in the introduction efficiency of the phosphorylcholine group onto the contact lens surface; this difference led to the superior effect of more efficiently suppressing protein adsorption. Also, [the present invention] is not selective about the contact lens material; furthermore, an adsorption prevention effect due to a structure specific to the present invention (-NH- in particular) is expected, too.

Stains on a contact lens result from adsorption of proteins and/or lipids contained in lacrimal fluid; these stains can cause eye troubles such as allergies and infections (Non-patent Document 1). Protein stains cause a fatal problem particularly for a moist contact lens whose main ingredient is a 2-hydroxyethyl methacrylate polymer, a highly moist soft contact lens prepared by copolymerizing this with a small amount of methacrylic acid, which is an ionic monomer, and a soft contact lens whose main ingredient is a polymer of a hydrophilic monomer such as N-vinyl pyrrolidone and N,N-dimethyl acrylamide.

Patent Document 1: Japanese Patent Laid-Open H10-177152 bulletin
Patent Document 2: Japanese Patent Laid-Open 2000-111847 bulletin
Patent Document 3: Japanese Patent Laid-Open 2000-169526 bulletin
Patent Document 4: Japanese Patent Laid-Open 2001-337298 bulletin
Patent Document 5: Japanese Patent Laid-Open H5-505121 bulletin
Non-patent Document 1: "Stains on soft contact lenses and analysis thereof", Material Stage, Vol. 4, No. 1, 2004

### DISCLOSURE OF INVENTION

### [Problem that the present invention aims to solve]

The present invention provides a contact lens that prevents protein stains by suppressing protein adsorption on the contact lens by means of an after-treatment in which phosphorylcholine groups having a specific structure are directly and covalently bonded onto the contact lens surface.

That is, the present invention does not prepare a protein adsorption prevention contact lens by polymerizing monomers having phosphorylcholine groups, as in the methods described in Patent Documents 1-3 above; its object is to give contact lenses a superior protein adsorption prevention function by means of an after-treatment.

Also, the present invention does not introduce phosphorylcholine groups by polymerizing phosphorylcholine-containing monomers onto the contact lens surface to coat it with a polymer different from the contact lens itself, as in a method described in Patent Document 4; it directly introduces phosphorylcholine groups, without using a polymer coating, and thus aims to achieve a superior protein adsorption prevention effect without changing the original characteristics of the contact lens with a polymer coating.

The treatment method described in Patent Document 5 does not mention how to synthesize the phosphorylcholine group-containing chemical compound having a carboxyl group for treating the material. Synthesizing it based on usual organic chemistry commonsense would end up in a very cumbersome and difficult process and the yield would be low due to multiple steps. Also, the reaction to introduce the phosphorylcholine compound having hydroxyl groups onto the contact lens surface, under the conditions described, does not proceed sufficiently and results in a low introduction level, which is insufficient for achieving a superior protein adsorption prevention effect, whereas the method of the present invention can introduce a sufficient amount of phosphorylcholine and achieve a superior protein adsorption prevention effect.

### [Means to solve the Problem]

That is, the present invention provides an eye lens material wherein phosphorylcholine groups are covalently bonded onto the material surface by means of an after-treatment in which a phosphorylcholine-containing chemical compound represented by the following formula (1) is reacted with an eye lens material. 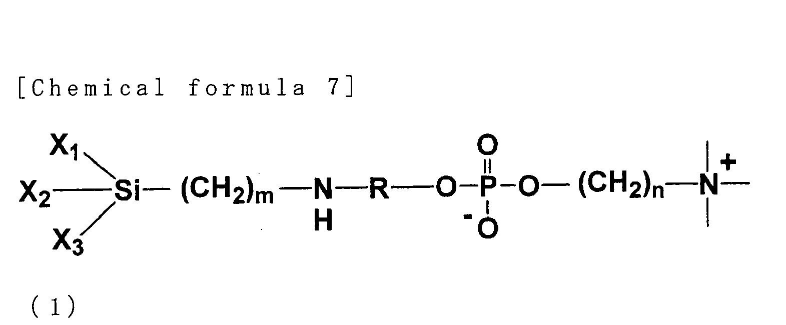 In this formula, m is 2-6 and n is 1-4. Also, -NH- in formula (6) can be -0-.
X₁, X₂, and X₃, independent of each other, denote a methoxy group, ethoxy group, or halogen. Up to two of X₁, X₂, and X₃ can be any of the following groups: a methyl group, ethyl group, propyl group, isopropyl group, butyl group, or isobutyl group.
R is one of the structures in the following formulas (2)-(4) (the chemical compound of formula (1) in the structures of the following formulas (2)-(4) is expressed as A-R-B).

[Chemical formula 8] **A- (CH₂)_{L} -B** (2)

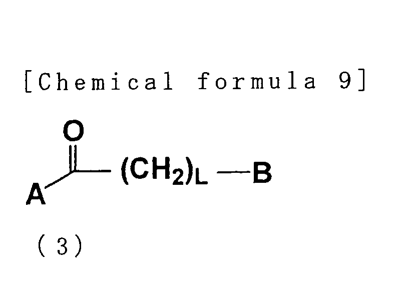

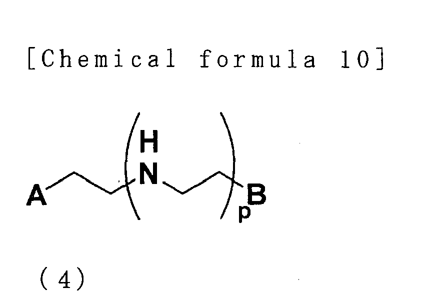

In formulas (2)-(4), L denotes 1-6, P denotes 0-3.

That is, the present invention provides a eye lens material wherein phosphorylcholine groups are covalently bonded to the eye lens material surface by means of an after-treatment in which a phosphorylcholine-containing chemical compound represented by the following formulas (5) and/or (6) is reacted with an eye lens material. 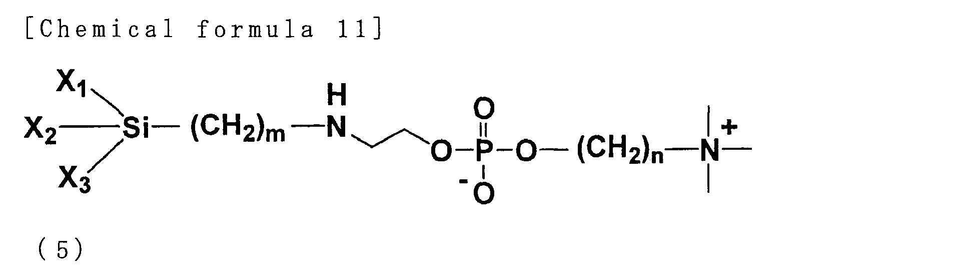 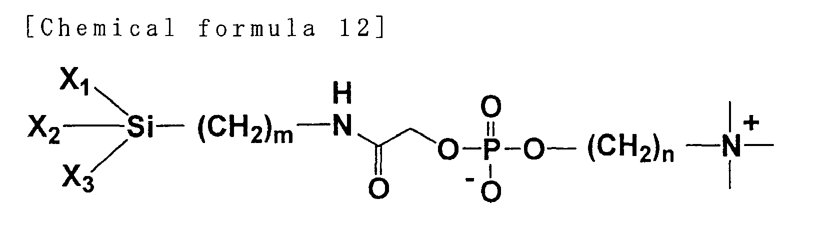 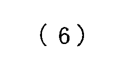 In this formula, m is 2-6 and n is 1-4. Also, -NH- in formula (6) can be -O-. X₁, X₂, and X₃, independent of each other, denote a methoxy group, ethoxy group, or halogen. Up to two of X₁, X₂, and X₃ can be any of the following groups: a methyl group, ethyl group, propyl group, isopropyl group, butyl group, or isobutyl group.

Furthermore, the present invention provides the aforementioned eye lens material wherein constituent monomers of the eye lens material include monomers containing a hydroxyl group.

Furthermore, the present invention provides the aforementioned eye lens material wherein constituent monomers of the eye lens material include monomers containing a carboxyl group.

Furthermore, the present invention provides the aforementioned eye lens material wherein constituent monomers of the eye lens material include 2-hydroxyethyl methacrylate.

Also, the present invention provides the aforementioned eye lens material wherein constituent monomers of the eye lens material include vinyl alcohol.

Furthermore, the present invention provides the aforementioned eye lens material wherein constituent monomers of the eye lens material include (meth)acrylic acid or (meth)acrylic ester.

Also, the present invention provides the aforementioned eye lens material wherein constituent monomers of the eye lens material include N-vinyl pyrrolidone.

Furthermore, the present invention provides a method of manufacturing an eye lens material wherein phosphorylcholine groups are covalently bonded onto the material surface by means of an after-treatment in which the aforementioned phosphorylcholine-containing chemical compound is reacted with an eye lens material.

Also, the present invention provides a protein adsorption prevention method for an eye lens material wherein protein adsorption on the eye lens material is prevented by covalently bonding phosphorylcholine groups onto the eye lens material surface by means of an after-treatment in which the aforementioned phosphorylcholine group-containing chemical compound is reacted with the eye lens material.

### [Effects of the invention]

The eye lens material of the present invention is a contact lens onto whose surface phosphorylcholine groups are directly and covalently bonded and therefore it effectively suppresses protein adsorption on the contact lens and achieves a superior stain prevention effect. It can also improve moisture retention and the sensation of wearing [the contact lens].

Also, since the protein adsorption prevention function can be added by means of an after-treatment, the present invention can be easily used on existing contact lenses.

Since polymer coating is not used as the method to introduce the phosphorylcholine groups, the phosphorylcholine groups can be introduced onto contact lenses of any material, durability is superior, and the original characteristics of the contact lens are essentially not degraded.

The contact lens obtained by the present invention is a contact lens that gives a superior sensation when it is worn. Therefore it can be preferably used in situations where wearing contact lenses tends to feel like a foreign body [is touching the eye] due to reasons such as poor flexibility of the material.

The present invention has advantages in that the selection of the contact lens material is not limited in any way, it can be used as an after-treatment method, and a contact lens to which phosphorylcholine groups of a specific structure are firmly covalent bonded can be manufactured. The after-treatment can be carried out preferably in an organic solvent or in a water-containing organic solvent; it does not require strictly moisture-free conditions, which is an advantage. Furthermore, an adsorption prevention effect by a structure specific to formula (1) (-NH- in particular) can be expected as well.

### BRIEF DESCRIPTION OF DRAWINGS

Fig. 1 is a 1H-NMR spectrum of the chemical compound of formula (9).
Fig. 2 is a 1H-NMR spectrum of the chemical compound of formula (10).

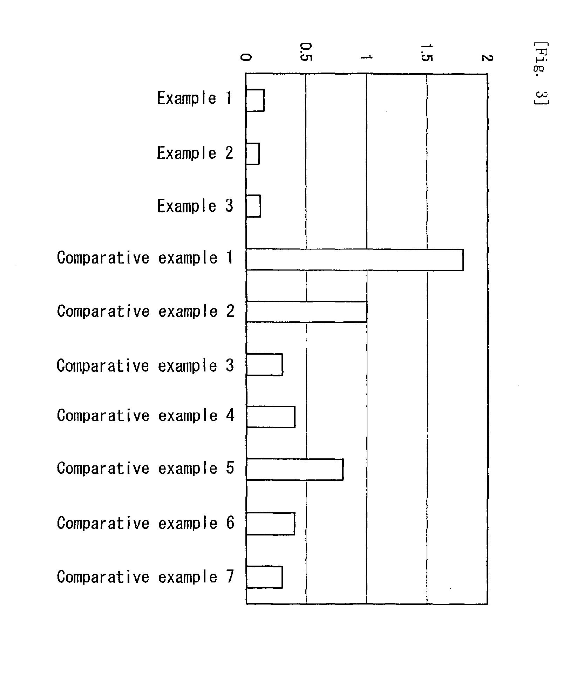

Fig. 3 is a graph showing protein adsorption on the contact lenses of Examples and Comparative examples.

### BEST MODE FOR CARRYING OUT THE INVENTION

The present invention is described in detail below.

### "An eye lens material"

The eye lens material in the present invention refers to a molded piece of a material that is worn in the eye. It mainly refers to a contact lens.
A contact lens of any material can be used. The contact lens of the present invention can be prepared from a contact lens comprising a polymer such as methacrylic acid (MAA), acrylic acid (AA), 2-hydroxyethyl methacrylate (HEMA), N-vinylpyrrolidone (NVP), N,N-dimethylacrylamide (DMAA), vinyl alcohol (VA), methyl methacrylate (MMA), trifluoroethyl methacrylate (TFEMA), cellulose acetate butyrate (CAB), fluoro silicone, hexafluoroisopropyl methacrylate, perfluoroalkyl methacrylate, siloxanyl methacrylate (SiMA), siloxanyl styrene (SiSt), ethylene glycol dimethacrylate (EGDMA), allyl methacrylate (AMA), and silicone macromers, as well as a copolymer of two or more types of monomers. The present invention is independent of the type of monomer, and it can be used for both hard contact lenses and soft contact lenses.

A soft contact lens that uses 2-hydroxyethyl methacrylate as the main constituent ingredient and an ionic soft contact lens prepared by copolymerizing it with methacrylic acid are representative soft contact lenses; these contact lenses are susceptible to protein adsorption. Therefore, they are preferably treated with the method of the present invention.
Also, a contact lens whose main or copolymerizing constituent monomer is vinyl alcohol or N-vinyl pyrrolidone is also treated preferably with the method of the present invention.
Furthermore, hard contact lenses having methyl (meth)acrylate as a main ingredient of constituent monomers and hard contact lenses for extended wear and/or with oxygen permeability, to which proteins tend to be adsorbed, are also preferably treated with the method of the present invention.

A contact lens that contains 2-hydroxyethyl methacrylate and/or polyvinyl alcohol as a functional group to which the phosphorylcholine group of the aforementioned formula (1) can covalently bond is preferable because it has hydroxyl groups.
However, even if these functional groups are not present, hydroxyl groups capable of covalent bonding can be introduced onto the contact lens surface by means of a plasma treatment. For example, hydroxyl groups can be introduced onto a contact lens comprising N-vinyl pyrrolidone polymer to prepare the contact lens of the present invention.

### "A method of preparing an eye lens material"

The phosphorylcholine-containing chemical compound of formula (1), (5), or (6) is covalently bonded to the hydroxyl groups on the surface of a contact lens, i. e. an eye lens material.
The hydroxyl groups to be covalently bonded to are either hydroxyl groups of the constituent monomers of the contact lens or hydroxyl groups newly introduced onto the contact lens surface by means of a plasma treatment and such.
By using these in an after-treatment, the phosphorylcholine groups are covalently bonded directly onto the contact lens surface.
For the reaction between the hydroxyl groups of the contact lens and the aforementioned phosphorylcholine-containing chemical compound, a conventional method is used to form covalent bonds via a dehydration reaction. Not only hydroxyl groups but any functional groups existing on or introduced onto the contact lens surface can be made to covalently bond with the aforementioned phosphorylcholine-containing chemical compound.

The phosphorylcholine-containing chemical compound represented by formula (1), (5), or (6) is a new chemical compound that has a phosphorylcholine group and, as a silane coupling agent, is capable of covalently bonding to functional groups on the contact lens surface.

### "A method of preparing the phosphorylcholine group-containing chemical compound of formula (1), (5), or (6)"

It can be prepared by means of the following method.
The phosphorylcholine derivative shown in the following formula (7) is dissolved in distilled water. The phosphorylcholine derivative of the following formula (7) is a prior art chemical compound and commercially available.

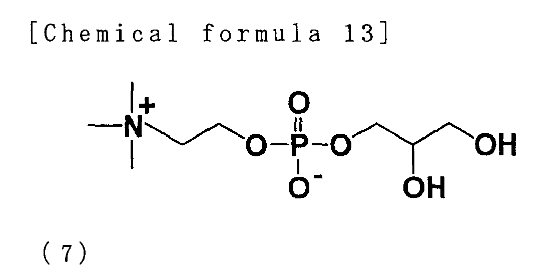

An aqueous solution of the chemical compound of formula (7) is cooled in an icy water bath; then sodium periodate is added, followed by five hours of stirring. The reaction fluid is concentrated and dried under reduced pressure; methanol is used to extract a phosphorylcholine derivative having an aldehyde group shown in the following formula (8).

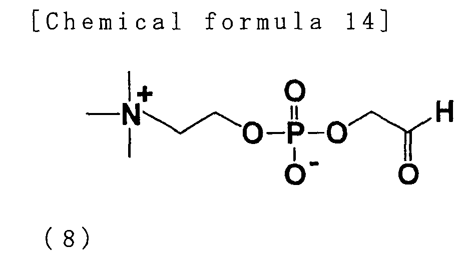

0.5 equivalents of 3-aminopropyltrimethoxysilane is added to a methanol solution of formula (8). This mixed solution is stirred for a prescribed amount of time at room temperature and cooled with ice; an appropriate amount of sodium cyanoborohydride is then added and the temperature is returned back to room temperature, followed by 16 hours of stirring. During this period, dried nitrogen is continued to be fed through the reaction vessel. After filtering the precipitate, a methanol 1 solution of formula (5) is obtained.
This method gives a chemical compound of the following formula (9) as the chemical compound of formula (5). The same method can be used with other silane compounds instead of 3-aminopropylmethoxysilane to obtain a chemical compound of general formula (1) or (5). 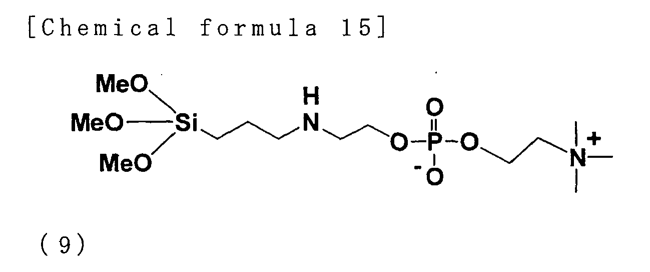 An aqueous solution of the chemical compound of formula (7) is cooled in an icy water bath; sodium periodate and a catalytic amount of ruthenium trichloride are added, followed by three hours of stirring. The reaction fluid is concentrated under reduced pressure and dried under reduced pressure; methanol is used to extract a phosphorylcholine derivative (a) having a carboxyl 1 group. 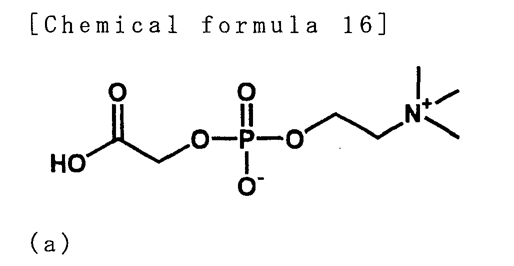 Next, 1.2 equivalents of thionyl chloride is added to formula (a) dispersed in acetonitrile or N,N-dimethylformamide and, after 30 minutes of stirring, 0.9 equivalents of 3-aminopropyltrimethoxysilane is added to the solution. This mixed solution is stirred for four hours at room temperature.
This method gives a chemical compound of the following formula (10) as the chemical compound of formula (6). The same method can be used with other silane compounds instead of 3-aminopropylmethoxysilane to obtain a chemical compound of general formula (1) or (5). 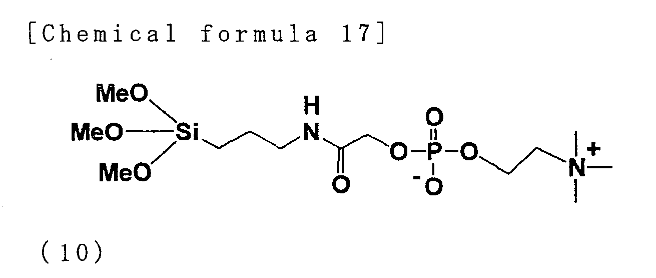 In addition to thionyl chloride, any reagent can be used for the aforementioned condensation reaction as long as it generates halogenated carboxylic acid; examples include phosphorus pentachloride, phosphorus oxychloride, phosphorus tribromide, and oxalyl chloride.

The chemical compounds of formulas (9) and (10) can be purified with the following method. That is, the methanol solution obtained as described above is concentrated under reduced pressure and the residue is used as a sample. A high speed liquid chromatography column Capsule Pack AQ C18 (size: 4.6 mm i. d. x 250 mm) (from Shiseido) is connected to a HPLC apparatus and equilibrated with methanol at a flow rate of 1 mL/minute, followed by injection of 10 microliters of the sample. A chromatogram can be obtained by using a differential refractometer as a detector, and the chemical compound of formula (9) or (10) can be isolated.
However, the aforementioned chemical compound can be used as is at the methanol solution stage before purification.

The procedure described above can be carried out in the same way even when m and n in the chemical compounds represented by formula (5) or (6) change. The procedure shown here is for m = 3 and n = 2. Furthermore, a secondary amine can be inserted between the silane portion and the phosphorylcholine group by using 3-(2-aminoethylaminopropyl) trimethoxysilane and such for the silane compound having an amino group. The reaction solvent is not limited in particular for formula (5); in addition to methanol, which was mentioned above, alcohols such as ethanol, propanol, and butanol, and aprotic solvents such as N,N-dimethylformamide and dimethylsulfoxide can be used. Note, however, that a dehydrated solvent is preferable to prevent polymerization of the organic silane compound during the reaction. For formula (6), an aprotic solvent is preferably used to prevent the generated acid chloride from decomposing.
If a methoxy group (OCH₃) in formula (5) or (6) is replaced by an ethoxy group (OC₂H₅), then the reaction is carried out by using ethanol instead of methanol; if it is replaced by Cl, then dimethylformamide or dimethylsulfoxide is used instead.
Furthermore, even when one or two out of the methoxy groups, ethoxy groups, or Cl's to be bonded to Si is replaced by a methyl group, ethyl group, propyl group, isopropyl group, or isobutyl group, the preparation can be carried out in the same manner as described above.

### "A method of introducing phosphorylcholine groups to the hydroxyl groups of a contact lens"

A covalent bond is formed by means of a dehydration reaction between the hydroxyl group on the contact lens surface and SiOMe of the chemical compound of the following formulas (9) and/or (10). This chemical reaction proceeds very easily and quantitatively in most organic solvents. Chemically and physically very stable phosphorylcholine groups can be introduced by means of this dehydration reaction, which is preferable.
Specifically, commercially available contact lenses were immersed in an organic solvent such as methanol, ethanol, and N,N-dimethylformamide in which the phosphorylcholine-containing chemical compound of formula (9) and/or (10) was dissolved, followed by a reaction at room temperature. As for the reaction conditions, heating can be done as necessary, and water, acid or base catalysts can be added as well. 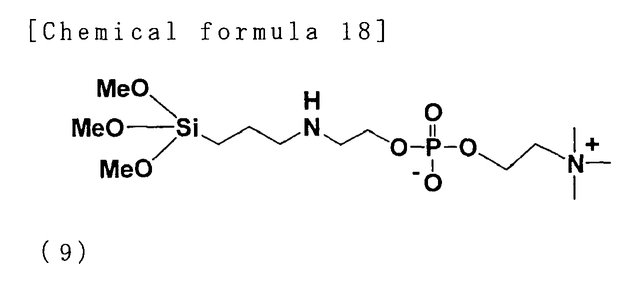 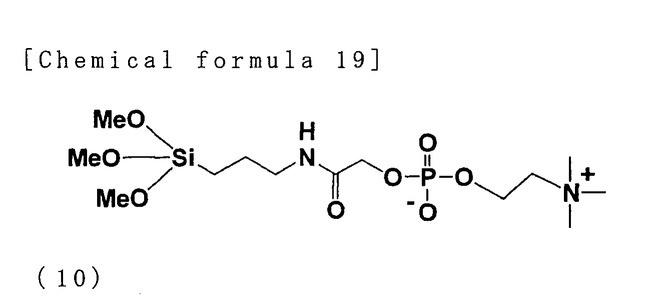 In these formulas, OMe can be replaced by OEt or Cl. Up to two of the OMe's, OEt's, or C1's to be bonded to Si can be replaced by a methyl group, ethyl group, propyl group, isopropyl group, or isobutyl group.

The phosphorylcholine group of formula (1), introduced by means of the method described above or the like, is, after a pre-treatment using perchloric acid, quantified with the molybdenum blue method for quantitative analysis of phosphorus (Reference: 3.8.2 Phosphorus, Analysis, 4^{th} edition, Experimental Chemistry Course (14), Maruzen).
The amount of the phosphorylcholine group introduced onto the contact lens is preferably 0.0001 micromol/mg or more. If it is less than 0.0001 micromol/mg then a sufficient protein adsorption suppression effect is not obtained sometimes; however, this does not apply to the case in which the phosphorylcholine group is introduced only on the contact lens surface. The protein adsorption suppression effect increases as the amount introduced increases; therefore there is no upper limit for the amount introduced.

### EXAMPLES

Next, the present invention is described in detail by referring to Examples. The present invention is not limited to these Examples.

### "Protein adsorption experiment"

The contact lenses of the present invention were prepared by using commercially available contact lenses. The protein adsorption suppression effect was compared based on the following evaluation method.

### "Evaluation method"

A contact lens was immersed in 3 ml of an artificial lacrimal fluid and left alone for 24 hours at 37 °C. The protein level in the solution portion was quantified with the BCA method (the calibration curve: Albumin Bovine); the protein adsorption level was determined as the reduction in the proteins in the solution portion.
The artificial lacrimal fluid was obtained by dissolving the following ingredients in ultra pure water:
1.20 mg/ml lysozyme, 3.88 mg/ml albumin, 1.61 mg/ml y -globulin, 9.00 mg/ml sodium chloride, 0.14 mg potassium dihydrogen phosphate, and 0.80 mg/ml disodium hydrogen phosphate heptahydrate. (Reference) FDA Guideline Draft: Testing guidelines for class III soft(hydrophilic) contact lens solution, lens group compatibility test. July 15, 1985.

### "Synthesis example 1: Preparation of the chemical compound of formula (9) (Preparation of an amine-type silane coupler containing a phosphorylcholine group)"

1-α -glycerophosphorylcholine (450 mg) was dissolved in 15 ml of distilled water and cooled in an ice water bath. Sodium periodate (750 mg) was added, followed by five hours of stirring. The reaction fluid was concentrated under reduced pressure and dried under reduced pressure; methanol was used to extract the target substance represented by chemical formula (5). Next, 3-aminopropylmethoxysilane (300 mg) was added to the aforementioned methanol solution; after five hours of stirring at room temperature, [the mixture] was cooled with ice, sodium cyanoborohydride (100 mg) was added, and the temperature was raised back to room temperature, followed by 16 hours of stirring. During this time dry nitrogen continued to be fed through the reaction vessel. The precipitate was filtered to obtain a methanol solution of formula (9).

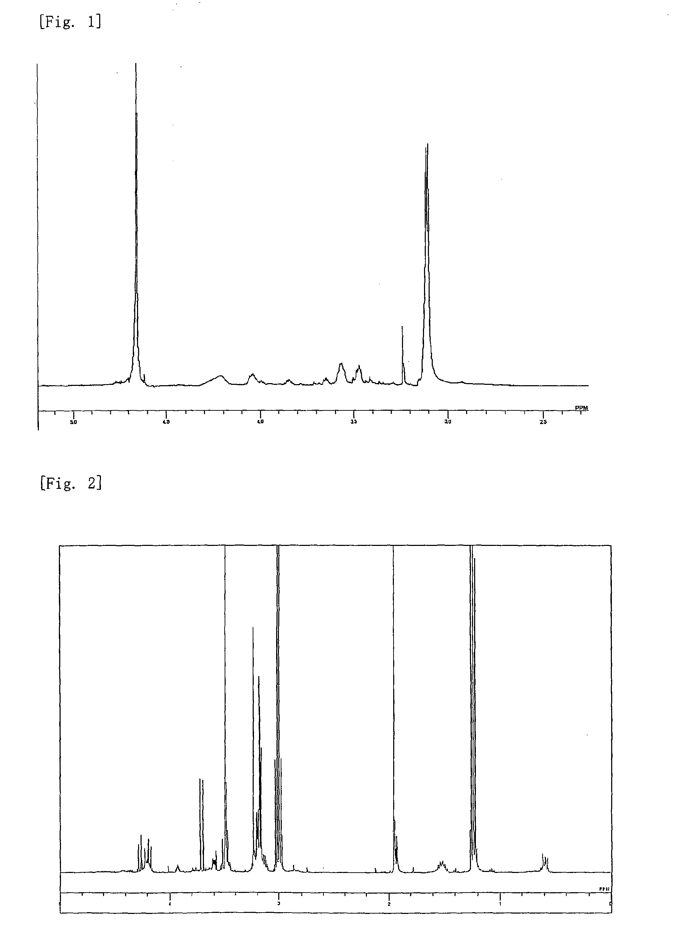

Fig. 1 shows a 1H-NMR spectrum of the chemical compound of formula (9).

### "Synthesis example 2: Preparation of the chemical compound of formula (10) (Preparation of an amide-type silane coupler containing a phosphorylcholine group)"

5 g of 1-α -glycerophosphorylcholine was dissolved in water (70 ml)/acetonitrile (30 ml). As the temperature was lowered with ice, 17 g of sodium periodate and 80 mg of ruthenium trichloride were added, followed by overnight stirring. After filtering the precipitate, concentration under reduced pressure and methanol extraction were carried out to obtain the target carboxymethyl phosphorylcholine represented by chemical formula (6). Next, the chemical compound of formula (6) and 3 g of thionyl chloride were added to acetonitrile at an icy cool temperature, followed by 30 minutes of stirring. 3.8 g of 3-aminopropyltrimethoxysilane was added and stirred was done for three hours at room temperature while dry nitrogen is continued to be fed through the reaction vessel to obtain the chemical compound (10).
Fig. 2 shows a 1H-NMR spectrum of the chemical compound of formula (10).

### "Example 1"

One commercially available soft contact lens EtafilconA (from Vistakon, constituent monomers: HEMA and MAA) was put into methanol (2.4 ml)/water (0.6 ml), into which 50 mg of the phosphorylcholine-containing chemical compound of formula (9) was added, followed by six hours of stirring at 60°C. After water rinsing, a contact lens to which phosphorylcholine groups were introduced was obtained.
The molybdenum blue method was used to quantify the amount of the introduced phosphorylcholine group of formula (9); the result was 0.020 micro-mg/mg.

### <Quantification method>

The obtained contact lens was immersed in perchloric acid and heated up to 180°C to be decomposed. The obtained solution was diluted with water, to which hexaammonium heptamolybdate tetrahydrate and L-ascorbic acid were added, followed by 5 minutes at 95°C of color development time; the amount introduced was determined by means of the light absorption measurement at 710 nm. For the calibration curve, a sodium dihydrogen phosphate solution was used.

### "Example 2"

One commercially available soft contact lens NelfilconA (from CIBA, constituent monomer: modified PVA) was put into methanol (2.4 ml)/water (0.6 ml), into which 50 mg of the phosphorylcholine-containing chemical compound of formula (10) was added, followed by six hours of stirring at 60°C. After water rinsing, a contact lens to which phosphorylcholine groups were introduced was obtained.

The molybdenum blue method was used to quantify the amount of the introduced phosphorylcholine group of formula (10); the result was 0.015 micro-mg/mg.

### "Example 3"

One commercially available soft contact lens Polymacon (from Baush & Lomb, constituent monomer: HEMA) was put into methanol (2.4 ml)/water (0.6 ml), into which 50 mg of the phosphorylcholine-containing chemical compound of formula (10) was added, followed by six hours of stirring at 60°C. After water rinsing, a contact lens to which phosphorylcholine groups were introduced was obtained.
The molybdenum blue method was used to quantify the amount of the introduced phosphorylcholine group of formula (1); the result was 0.018 micro-mg/mg.

### "Comparative examples 1-5"

For comparison, the following commercially available contact lenses were used.
Comparative example 1: EtafilconA (product name: 1-Day Acuvue from J & J)
Comparative example 2: EtafilconA (product name: 1 Day Aquair from Ocular Science)
Comparative example 3: NelfilconA (Focus Dailies from Ciba Vision)
Comparative example 4: Polymacon (product name: Medalist from Bausch & Lomb)
Comparative example 5: VifilconA (Focus from Ciba Vision)

### "Comparative example 6"

Based on the technique described in Patent Document 5, 10 mg of 1-α -glycerophosphorylcholine, 20 mg of 1,1-carbonyldiimidazole, and 20 mg of triethylamine were added to 3 ml of dimethylsulfoxide, followed by two hours of stirring at 50°C. Polymacon, which was used in Example 1, was immersed in this solution, followed by 12 hours of reaction time at room temperature. The contact lens was thoroughly rinsed with dimethylsulfoxide and then with water; the phosphorus quantification showed the level of the introduced phosphorylcholine group to be at the detection limit, 0.0001 micromol/mg, or less, indicating that the reaction did not proceed.

### "Comparative example 7"

Based on the technique described in Patent Document 5, 10 mg of 1-α -glycerophosphorylcholine, 20 mg of 1,1-carbonyldiimidazole, and 20 mg of triethylamine were added to 3 ml of dimethylsulfoxide, followed by two hours of stirring at 50°C. NelfilconA, which was used in Example 2, was immersed in this solution, followed by 12 hours of reaction time at room temperature. The contact lens was thoroughly rinsed with dimethylsulfoxide and then with water; the phosphorus quantification showed the level of the introduced phosphorylcholine group to be at the detection limit, 0.0001 micromol/mg, or less, indicating that the reaction did not proceed.

Fig. 1 shows the results of protein adsorption for Examples 1 and 2 and Comparative examples 1-7. These results indicate that the contact lenses obtained by the preparation method of the present invention significantly suppress protein adsorption.

### INDUSTRIAL APPLICABILITY

The present invention can highly suppress protein adsorption on contact lenses and significantly prevent stains due to proteins.
The method of the present invention can be preferably used for soft contact lenses, for which protein staining is a fatal problem. It can be preferably used in particular for ionic soft contact lenses, which accelerate protein adsorption.
It can also be preferably used for hard contact lenses for extended wear and/or with oxygen permeability, to which proteins tend to be adsorbed.

## Claims

1. An eye lens material wherein phosphorylcholine groups are covalently bonded onto the material surface by means of an after-treatment in which a phosphorylcholine-containing chemical compound represented by the following formula (1) is reacted with an eye lens material. 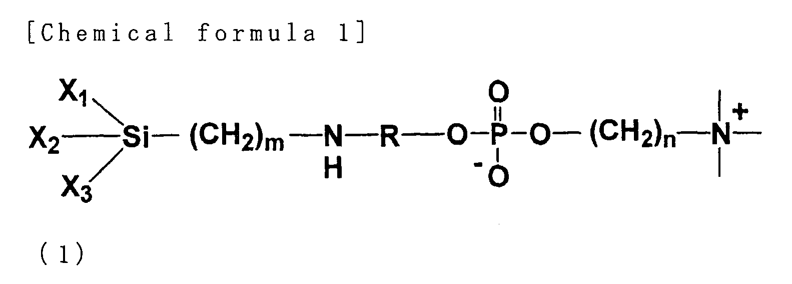 In this formula, m denotes 2-6 and n denotes 1-4. Also, -NH- can be -0-.
X₁, X₂, and X₃, independent of each other, denote a methoxy group, ethoxy group, or halogen. Up to two of X₁, X₂, and X₃ can be any of the following groups: a methyl group, ethyl group, propyl group, isopropyl group, butyl group, or isobutyl group.
R is one of the structures in the following formulas (2)-(4) (the chemical compound of formula (1) in the structures of the following formulas (2)-(4) is expressed as A-R-B).
[Chemical formula 2] **A- (CH₂)_{L} -B** (2) 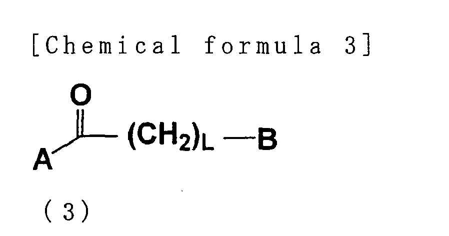 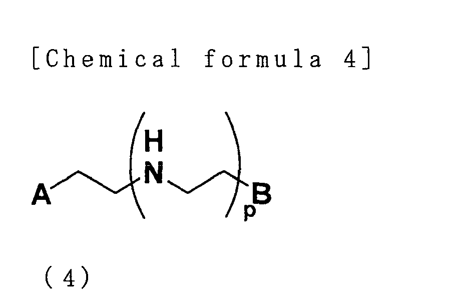
In formulas (2)-(4), L is 1-6, P is 0-3.

2. An eye lens material wherein phosphorylcholine groups are covalently bonded onto the material surface by means of an after-treatment in which a phosphorylcholine-containing chemical compound represented by the following formulas (5) and/or (6) is reacted with a eye lens material. 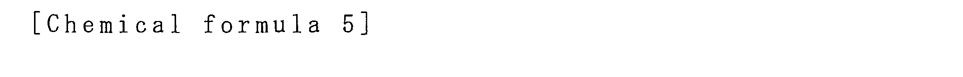 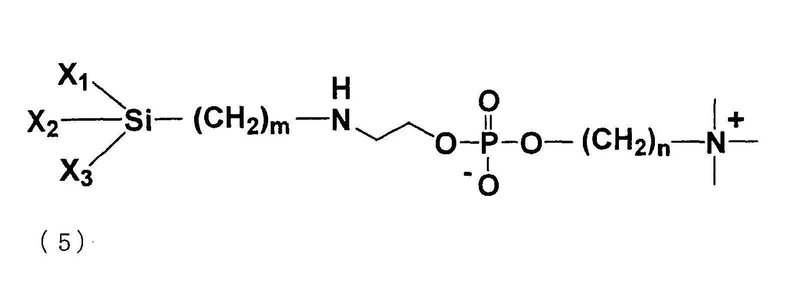 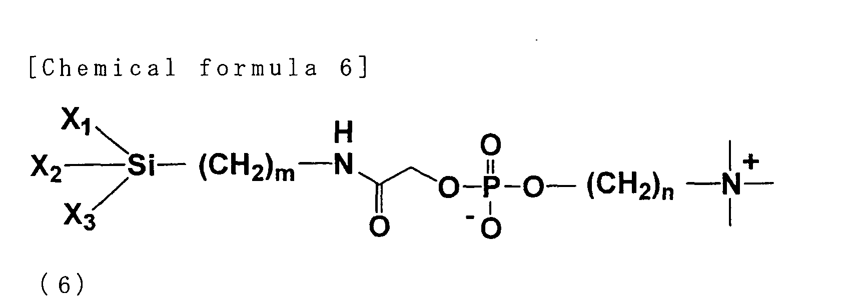 In this formula, m denotes 2-6 and n denotes 1-4. X₁, X₂, and X₃, independent of each other, denote a methoxy group, ethoxy group, or halogen. Up to two of X₁, X₂, and X₃ can be any of the following groups: a methyl group, ethyl group, propyl group, isopropyl group, butyl group, or isobutyl group. Also, -NH- in formula (6) can be - 0-.

3. The eye lens material of claim 1 or 2 wherein constituent monomers of the eye lens material include monomers containing a hydroxyl group.

4. The eye lens material of claim 1 or 2 wherein constituent monomers of the eye lens material include monomers containing a carboxyl group.

5. The eye lens material of claim 1 or 2 wherein constituent monomers of the eye lens material include 2-hydroxyethyl methacrylate.

6. The eye lens material of claim 1 or 2 wherein constituent monomers of the eye lens material include vinyl alcohol.

7. The eye lens material of claim 1 or 2 wherein constituent monomers of the eye lens material include (meth)acrylic acid or (meth)acrylic ester.

8. The eye lens material of claim 1 or 2 wherein constituent monomers of the eye lens material include N-vinyl pyrrolidone.

9. A method of manufacturing an eye lens material wherein phosphorylcholine groups are covalently bonded onto the material surface by means of an after-treatment in which the phosphorylcholine-containing chemical compound of claim 1 or 2 is reacted with an eye lens material.

10. A protein adsorption prevention method for an eye lens material wherein protein adsorption on the eye lens material is prevented by covalently bonding phosphorylcholine groups onto the eye lens material surface by means of an after-treatment in which the phosphorylcholine group-containing chemical compound described in claim 1 or 2 is reacted with the eye lens material.
